# EUROPÄISCHE PATENTSCHRIFT

(11) **EP 1 840 136 B1**
(45) Veröffentlichungstag und Bekanntmachung des Hinweises auf die Patenterteilung: **11.08.2010**
(21) Anmeldenummer: 07003698.3
(22) Anmeldetag: 23.02.2007
(51) Int. Cl.: C08F 2/00

(54) **Polymerdispersionen, Verfahren zu deren Herstellung und deren Verwendung**
Polymer dispersions, method for their manufacture and their application
Dispersions de polymères, leur procédé de fabrication et d'utilisation

(30) Priorität: 25.03.2006 DE 102006013898
(43) Veröffentlichungstag der Anmeldung: 03.10.2007
(73) Patentinhaber: Celanese Emulsions GmbH, 61476 Kronberg/Ts. (DE)
(72) Erfinder: Désor, Ulrich, 65510 Idstein (DE); Krieger, Stephan, Dr., 65719 Hofheim (DE)
(74) Vertreter: Ackermann, Joachim

(56) Entgegenhaltungen:
- EP-A2- 0 349 383
- DE-A1- 2 524 432
- FR-A1- 2 781 806

## Beschreibung

Die vorliegende Erfindung betrifft neue Polymerdispersionen, die Filme mit hoher Blockfestigkeit und Kratzfestigkeit bilden und eine ausreichende Elastizität für Anwendungen auf nicht maßhaltigen Untergründen besitzen.

Zur Herstellung von wäßrigen Beschichtungen, die auf nicht maßhaltigen Untergründen appliziert werden können, z.B. von Holzlacken, Lasuren und Glanzfarben, benötigt man Bindemittel, die eine ausreichende Elastizität besitzen, so daß es bei der Bewitterung der Beschichtung zu keiner Rißbildung kommt.

Des weiteren wird von diesen Beschichtungen aber auch eine gewisse Härte gefordert, damit die Beschichtung eine gute Kratzfestigkeit und Blockfestigkeit besitzt. Aus ökologischen Gründen wird eine Verfilmung des Bindemittels im Bereich von 0 bis 40°C angestrebt, so daß keine oder nur geringe Mengen eines Filmkonsolidierungsmittels benötigt werden.

Bereits in der DE-A-1,220,613 werden so genannte Mehrstufenpolymerisate, auch als heterogene Dispersionen oder Core-shell Dispersionen bezeichnet, abgeleitet von (Meth)acrylaten und Vinylmonomeren beschrieben. Diese Technologie wird eingesetzt, um blockfeste Dispersionen bei gleichzeitig niedriger Verfilmungstemperatur (nachstehend auch Mindestfilmbildetemperatur oder auch "MFT" genannt) herzustellen.

Durch Auswahl geeigneter Vernetzer und Momomermischungen wie in EP-A-184,091, EP-A-15,644 und EP-A-795,568 beschrieben, konnte das Eigenschaftsprofil von Mehrstufenpolymerisaten hinsichtlich Blockfestigkeit, Reißdehnung und Kratzfestigkeit für die Anwendungen in Farben und Beschichtungen weiter verbessert werden. So ist aus EP-A-184,091 und EP-A-15,644 ist bekannt, daß man durch mehrstufige Emulsionspolymerisation wäßrige selbstvernetzende Polymerdispersionen herstellen kann, die eine niedrige MFT aufweisen und Filme mit hoher Blockfestigkeit bilden. Durch die Verwendung eines relativ hohen Anteils an weichen Monomeren in der ersten Stufe weisen die entsprechenden Polymerfilme aber Mängel bezüglich der Kratzfestigkeit auf.

Neben Mehrstufenpolymerisaten mit Verfilmungstemperaturen unterhalb der Raumtemperatur sind in EP-A-332,011 auch Systeme mit einer Verfilmungstemperatur von > 65 °C beschrieben. Ferner beschreibt EP-A-429,207 entsprechende Dispersionen mit Teilchengrößen im Bereich 20-70 nm.

Die aus EP-A-332,011 bekannten Mehrstufenpolymerisate besitzen eine MFT im Bereich von 65 bis 110°C. Diese Dispersionen bilden sehr kratzfeste Filme, benötigen aber bei Verwendung als Alleinbindemittel eine große Menge an Filmkonsolidierungsmittel. Des weiteren ist die Reißdehnung der entsprechenden Lackfilme für eine Anwendung auf nicht maßhaltigen Untergründen häufig nicht ausreichend.

Aus der EP-A-1,370,621 sind wässerige Dispersionen enthaltend Mehrstufenpolymerisate bekannt, die mit ionischen Emulgatoren und gegebenenfalls mit nichtionischen Emulgatoren stabilisiert sind. Nichtionische Emulgatoren werden, falls überhaupt anwesend, im Unterschuss eingesetzt. Als typische Vertreter von nichtionischen Emulgatoren ethoxylierte Mono-, Di- und Trialkylphenole beschrieben. Die wässerigen Dispersionen zeichnen sich durch eine verbesserte Blockfestigkeit der daraus gebildeten Verfilmungen aus.

EP-A-349,383 offenbart den Einsatz von arylsubstituierten Phenolalkylenoxyethern in Polymerdispersionen zur Erzeugung von Polymerlatices mit einem geringen Gehalt an Polymerisationsrückständen. Hinweise auf die Verbesserung der Scherstabilität von Dispersionen durch die Verwendung dieser Emulgatoren sind diesem Dokument nicht zu entnehmen.

Zur Herstellung von Mehrstufenpolymerisaten werden in der Regel mindestens zwei Monomeremulsionen nach einander polymerisiert, so daß die fertige Mehrstufendispersion mindestens zwei Polymerphasen enthält, die im Partikel unterschiedlich angeordnet seien können. Des weiteren ist auch das sogenannte Powerfeed Verfahren bekannt.

Bei der Emulsionspolymerisation werden üblicherweise ein oder mehrere Emulgatoren verwendet. In Abhängigkeit von den jeweils eingesetzten Monomerkombinationen werden üblicherweise nichtionische und/oder anionische Emulgatoren eingesetzt.

Für Dispersionen, die in Lacken, Lasuren als Bindemittel verwendet werden, ist es neben den guten Gebrauchseigenschaften der daraus gebildeten. Filme besonders wichtig, daß die Dispersionen scherstabil sind. Die Verarbeitung dieser Dispersionen erfolgt häufig durch Sprayapplikation. Dabei kommt es zu Scherbeanspruchung an den Düsen und bei mangelnder Scherstabilität zur Koagulatbildung und damit zur Verstopfung der Düsen.

Typische Vertreter von bisher eingesetzten nichtionischen Emulgatoren sind alkyoxylierte Alkohole oder alkoylierte Alkylphenole. In jüngster Zeit versucht man so genannte Alkyphenolethoxylate (nachstehend auch als "APEO" bezeichnet) als nichtionische Emulgatoren zu vermeiden, da sie im Verdacht stehen eine hormonelle Wirkung aufzuweisen, und das Risiko von Mißbildungen bei der Entwicklung von Organismen in sich zu bergen.

Aufgabe der vorliegenden Erfindung ist die Bereitstellung von Dispersionen, die keine oder nur geringe Anteile APEO enthalten und die sich gut durch Sprayapplikation verarbeiten lassen, die bei Temperaturen zwischen 0 und 40°C verfilmen und Filme mit ausgezeichneter Block- und Kratzfestigkeit sowie mit einer ausreichende Elastizität ergeben und die sich zur Beschichtung von nicht maßhaltigen Untergründen eignen.

Eine weitere Aufgabe der vorliegenden Erfindung ist die Bereitstellung von Dispersionen, die keine oder nur geringe Anteile APEO enthalten und die sich insbesondere zur Herstellung von Holzlacken, Lasuren und Glanzfarben eignen.

Noch eine weitere Aufgabe der vorliegenden Erfindung ist die Bereitstellung eines APEO freien Emulgators, der die gewünschte Scherstabilität von Mehrstufenpolymerisat-Dispersionen gewährleistet aber nicht das Weißanlaufen und die Wasserfestigkeit der Dispersion verschlechtert.

Die vorliegende Erfindung betrifft eine Polymerdispersion enthaltend mindestens zwei Copolymerisate A und B in einem Gewichtsverhältnis von 5 : 95 bis 95 : 5, vorzugsweise 30 : 70 bis 70 : 30, besonders bevorzugt 40 : 60 bis 60 : 40, wobei sich die Glastemperaturen T_{g} der Copolymerisate A und B um mindestens 10 °C, bevorzugt um mindestens 20 °C, besonders bevorzugt um mindestens 30 °C, unterscheiden, sowie mindestens einen nichtionischen Emulgator aus der Gruppe der arylsubstituierten Phenolalkylenoxyether.

Die erfindungsgemäß eingesetzten Copolymerisate A und B können als physikalische Mischungen vorliegen oder vorzugsweise als Mehrstufenpolymerisate. Dabei kann die Mehrstufenpolymerisation mit der Herstellung des Colymerisats A beginnen, gefolgt von der Herstellung des Copolymerisats B oder es kann auch die umgekehrte Reihenfolge der Herstellung gewählt werden.

Das erfindungsgemäß bevorzugt eingesetzte Mehrstufenpolymerisat leitet sich von der Emulsionspolymerisation mindestens zweier Monomermischungen ab, welche die oben für die erste Phase (Monomermischung I) und für die zweite Phase (Monomermischung II) angegebene Zusammensetzung aufweisen.

Bei der erfindungsgemäß eingesetzten Mischung der Copolymeren A und B werden diese in separaten Ansätzen von Monomermischung I und Monomermischung II durch Emulsionspolymerisation hergestellt und anschließend miteinander gemischt.

Das Gewichtsverhältnis der Monomermischung I zur Monomermischung II und somit von der ersten Phase zur zweiten Phase bzw. vom ersten Copolymer und vom zweiten Copolymer beträgt 5 : 95 bis 95 : 5, vorzugsweise 30 : 70 bis 70 : 30, besonders bevorzugt 40 : 60 bis 60 : 40, bezogen auf die Monomere A und B der jeweiligen Stufe.

Die Auswahl der Monomeren der jeweiligen Stufen kann im Prinzip beliebig sein, vorausgesetzt die entstehenden Copolymeren unterscheiden sich in der Glasübergangstemperatur um mindestens 10 °C. Dem Fachmann ist die Einstellung einer bestimmten Glasübergangstemperatur durch Auswahl der Monomeren bekannt, beispielsweise lässt sich die Glasübergangstemperatur anhand der Fox-Flory Gleichung berechnen. Unter Glasübergangstemperaturen sind im Sinne dieser Beschreibung die gemäß DSC ermittelten Werte (bei einer Aufheizgeschwindigkeit von 10 K/min) zu verstehen.

Die Monomermischungen I und II werden üblicherweise so ausgewählt, dass ein Copolymer A mit Glasübergangstemperaturen von -60 bis 30 °C entsteht und dass ein Copolymer B mit Glasübergangstemperaturen von 30 bis 120 °C entsteht, vorzugsweise ein Copolymer A mit Glasübergangstemperaturen von -40 bis 20 °C und ein Copolymer B mit Glasübergangstemperaturen von 45 bis 115 °C.

Zur Herstellung der erfindungsgemäßen wässrigen Polymerdispersionen durch Emulsionspolymerisation können Gemische beliebiger radikalisch polymerisierbarer ethylenisch ungesättigter Monomerer eingesetzt werden.

Vorzugsweise handelt es sich dabei um Monomermischungen enthaltend Acrylate und/oder Methacrylate und/oder Vinylaromaten und/oder Vinylester als Hauptmonomere. Dabei ist der Einsatz von Monomermischungen enthaltend Acrylate und/oder Methacrylate und/oder von Vinylaromaten besonders bevorzugt.

Hauptmonomere liegen üblicherweise in Mengen von 70 bis 99,9 Gew. %, bezogen auf die Gesamtmenge der in der Copolymerisation eingesetzten Monomeren, vor.

Neben den Hauptmonomeren werden geringe Anteile von Monomeren mit stabilisierenden Gruppen, wie Säure- oder Amidgruppen, eingesetzt. Die Mengen davon betragen üblicherweise 0,1 bis 10 Gew. %, vorzugsweise 0,2 bis 5,0 Gew. %, bezogen auf die Gesamtmenge der in der Copolymerisation eingesetzten Monomeren.

Neben den Hauptmonomeren und den Monomeren mit stabilisierenden Gruppen können gegebenenfalls weitere Monomere eingesetzt werden. Dabei handelt es sich um die Gruppen der ketogruppenhaltigen Monomeren und der sonstigen Monomeren. Deren Mengen betragen üblicherweise jeweils 0,0 bis 10 Gew. %, vorzugsweise 0,0 bis 5,0 Gew. %, bezogen auf die Gesamtmenge der in der Copolymerisation eingesetzten Monomeren.

Besonders bevorzugt werden Monomermischungen mit folgender Zusammensetzung eingesetzt:
a) 85 bis 99,8 Gew. % Acrylsäureester mit C₁ bis C₂₀ Alkanolen, Methacrylsäureester mit C₁ bis C₁₂ Alkanolen und / oder vinylaromatischer Monomeren und/oder Vinylestern von gesättigten C₁-C₆ Carbonsäuren,
b) 0,2 bis 5 Gew. % Monomere mit stabilisierenden Gruppen, wie copolymerisierbare Carbonsäuren, copolymerisierbare Carbonsäureamide, copolymerisierbare Phosphate und/oder Phosphonate, copolymerisierbare Sulfate und/oder copolymerisierbare Sulfonsäuren und/oder deren Salze,
c) 0 bis 10 Gew. % Monomere mit Ketogruppen, und
d) 0 bis 10 Gew. % sonstige Monomere.

Die Auswahl der Monomermischungen erfolgt dabei im Einzelfall so, dass das Copolymere mit der gewünschten Glasübergangstemperatur entsteht.

Als Monomere a) werden vorzugsweise Acryl- und Methacrylsäureester von C₁ bis C₂₀ Monoalkoholen wie z.B. Ethylacrylat, Butylacrylat, n-Octylacrylat, 2-Ethylhexylacrylat, Methylmethacrylat, Butylmethacrylat, Cyclohexylmethacrylat, Isobornylmethacrylat, und/oder vinylaromatische Monomere wie z.B. Styrol oder Vinyltoluol, und/oder Vinylacetat verwendet.

Wird nach dem Verfahren der Mehrstufenemulsionspolymerisation gearbeitet, so werden die hartmachenden und weichmachenden Monomere und das Masseverhältnis der einzelnen Polymerisationsstufen vorzugsweise so kombiniert, dass die Dispersion eine Mindestfilmbildetemperatur im Bereich 0 bis 80°C, vorzugsweise von 0 bis 50 °C besitzt und die entsprechenden Dispersionsfilme bei einer Filmdicke von 100 µm eine Reißdehnung von >100% besitzen.

Als Monomere mit stabilisierenden Gruppen b) werden vorzugsweise copolymerisierbare Carbonsäuren und Carbonsäureamide, wie Acrylsäure, Methacrylsäure, Itaconsäure, Acrylamid, und Methacrylamid verwendet und / oder copolymerisierbare Sulfate und/oder copolymerisierbare Sulfonate, wie Natriumethensulfonat, Sulfoalkyl(meth)acrylate z.B. Kaliumsalz von Sulfopropylmethacrylat (=SPM^{®} der Firma Raschig), Sulfoalkyl(meth)acrylamide, z.B. das Natriumsalz der Acrylamido-2-methyl-propansulfonsäure (= AMPS^{®} der Firma Lubrizol).

Außerdem können als Monomere mit stabilisierenden Gruppen b) mit radikalisch polymerisierbaren Gruppen modifizierte Phosphate und/oder Phosphonate eingesetzt werden. Beispiele dafür sind Vinylphosphonat oder die oben erwähnten mit Phosphat- und/oder Phosphonatgruppen copolymerisierbar modifizierten Alkoholetherphosphate.

Als ketogruppenhaltige Monomere c) können Acetoacetoxygruppen haltige Monomere z.B. Acetoacetoxyethylmethacrylat, Acetoacetoxybutylmethacrylat, Acrylamidomethylacetylaceton und Acetessigsäurevinylester und polymerisierbare Derivate des Diacetons, wie Diacetonacrylamid und Diacetonmethacrylamid, sowie Butanonmethacrylsäurester verwendet werden.

Als weitere Monomere d) können unterschiedlichste, radikalisch polymerisierbare Verbindungen verwendet werden. Dazu zählen beispielsweise Monomere von denen bekannt ist, daß sie die Haftung der Polymerfilme auf verschiedenen Untergründen verbessern können. Beispiele dafür sind (Meth)acrylate abgeleitet von Alkoholen oder Phenolen mit polaren oder reaktiven Substituenten, wie Hydroxyalkyl(meth)-acrylate, Glycidyl-(meth)acrylate, (Meth)acryloyloxyalkylsilane und (Meth)acryloyloxyalkylphospate; oder ethylenisch ungesättige Silane, wie Alkoxyvinylsilane, oder polymerisierbare Ethylenharnstoffderivate, wie N-(β-(Meth)acryloxyethyl)-N,N'-ethylenharnstoff und N-(β-Acrylamidoethyl)-N,N'-ethylenharnstoff.

Zur Verbesserung des Anschmutzverhaltens oder zur Erhöhung der Chemikalienbeständigkeit können Dispersionen, die ketogruppen-haltige Monomere c) enthalten, mit polyfunktionellen Carbonsäurehydraziden versetzt werden, die mindestens zwei Hydrazidgruppen, wie beispielsweise Adipinsäuredihydrazid, Oxalsäuredihydrazid, Isophthalsäure-dihydrazid und Polyacrylsäurepolyhydrazid, enthalten.

Vorzugsweise wird ein molares Verhältnis von 0,4 : 0,6 bis 0,6 : 0,4, insbesondere ein äquimolares Verhältnis an Hydrazidgruppen zu über Monomere c) eingebauten Ketogruppen verwendet.

Eine weitere Komponente der erfindungsgemäßen Dispersion ist ein ausgewählter nichtionischer Emulgator.

Unter arylsubstituiertem Phenolalkylenoxyether sind im Rahmen dieser Beschreibung nichtionische Emulgatoren zu verstehen, die eine mit ein oder mehreren Arylgruppen substituierte Aryloxygruppe aufweisen, wobei die Phenolgruppe mit (Poly)alkylenoxidresten substituiert ist. Der (Poly)alkylenoxidrest kann an seinem anderen Ende eine freie Hydroxylgruppe aufweisen; vorzugsweise ist diese jedoch verethert, insbesondere mit einem Alkylrest. Die Arylsubstituenten der Aryloxygruppe können über eine kovalente Bindung mit der Aryloxygruppe verknüpft sein oder über eine Brückengruppe, wie ein Sauerstoffatom oder eine Alkylengruppe. Unter Aryloxygruppe sind im Rahmen dieser Beschreibung aromatische Kohlenwasserstoffreste zu verstehen, die mindestens eine phenolische Hydroxylgruppe aufweisen.

Bevorzugte arylsubstituierte Phenolalkylenoxyether sind Verbindungen der Formel I oder II 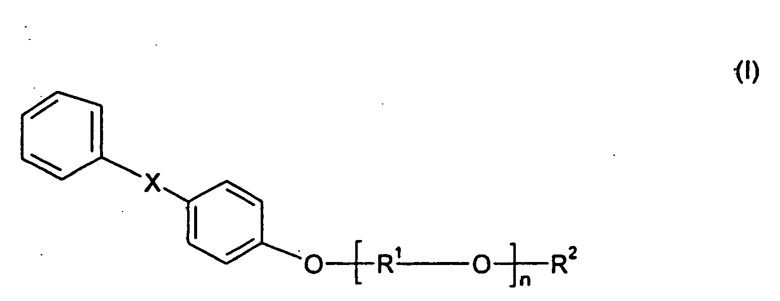 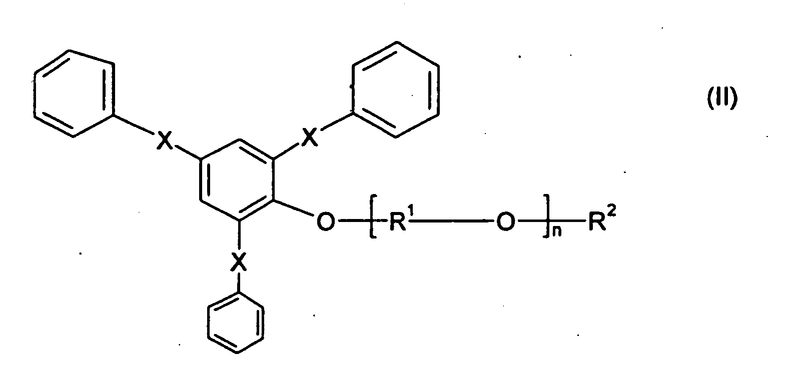 worin X eine kovalente Bindung, Sauerstoff oder ein Alkylenrest, vorzugsweise eine kovalente Bindung oder ein Rest -CₒH₂ₒ- mit o = 1 bis 6 ist, n eine ganze Zahl zwischen 1 und 40 bedeutet, R¹ ein Alkylen- oder Cycloalkylenrest ist, vorzugsweise ein Rest -CₚH₂ₚ- mit p = 2 bis 4 ist, und R² Wasserstoff oder ein Alkyl- oder Cycloalkylrest, vorzugsweise Methyl oder Ethyl ist.

Emulgatoren dieses Typs sind beispielsweise unter dem Handelsnamen Emulsogen (Clariant GmbH, Frankfurt am Main, Deutschland) verfügbar.

Ein besonders bevorzugt eingesetzter Emulgator dieses Typs ist ein ethoxyliertes 2,4,6-Tris-(1-phenylethyl)-phenol, insbesondere Verbindungen mit Ethoxylierungsgraden von 20 bis 30 Ethylenoxideinheiten pro Mol.

Die Herstellung der erfindungsgemäßen Dispersion kann nach den gängigen Verfahren der Emulsionspolymerisation erfolgen, indem die Monomere der ersten Stufe I und der zweiten Stufe II nacheinander oder in getrennten Reaktoren in wäßriger Phase in Gegenwart von Emulgatoren, Initiatoren und gegebenenfalls Schutzkolloiden bei Temperaturen von beispielsweise 60 bis 95°C emulgiert und polymerisiert werden. Als Emulgatoren kommen dabei arylsubstituierte Phenolalkylenoxyether gegebenenfalls in Kombination mit anionischen oder kationischen Emulgatoren in Frage.

Vorzugsweise wird nach dem Emulsions-Zulaufverfahren gearbeitet, bei dem eine kleine Menge der ersten Stufe (Monomermischung I) vorpolymerisiert wird und anschließend nacheinander die verbleibende Menge an Monomeren der ersten Stufe und im Falle der Mehrstufenpolymersation die Monomeren der zweiten Stufe (Monomermischung II) in Form einer wäßrigen Emulsion zudosiert werden. Alternativ kann auch nacheinander oder in getrennten Reaktoren ein Monomerzulauf von Monomermischung I und Monomermischung II erfolgen, sowie eine nacheinanderfolgende Batchpolymerisation von Monomermischung I und II.

Die Herstellung von hochwertigen Dispersionen gemäß der vorliegenden Erfindung setzt die Anwendung der auf dem Gebiet der Emulsionspolymerisation bestehenden Erfahrungen, auch soweit sie hier nicht beschrieben sind, voraus. Die Mißachtung, der dem Fachmann der Emulsionspolymerisation bekannten Regeln, kann daher wichtige Eigenschaften, z. B. die Wasserbeständigkeit der Dispersionsfilme beeinträchtigen.

Die Dispersionen sollen deshalb bezogen auf den Gehalt an Polymerisat, die üblicherweise verwendeten Mengen von bis zu 3%, vorzugsweise bis zu 2%, an ionischen Emulgatoren sowie von bis zu 6%, vorzugsweise von bis zu 4%, an nichtionischen arylsubstituierten Phenolalkylenoxyethern nicht wesentlich überschreiten.

Die üblicherweise als nichtionische Emulgatoren eingesetzten Alkylpolyglykolether, wie Ethoxilierungsprodukte von Lauryl-, Oleyl- oder Stearylalkohol oder von Gemischen wie Kokosfettalkohol; Alkylphenolpolyglykolether, wie Ethoxilierungsprodukte von Octyl- oder Nonylphenol, von Diisopropylphenol, Triisopropylphenol oder von Di- oder Tri-tert.-butylphenol; sowie die Ethoxilierungsprodukte von Polypropylenoxid werden im Rahmen dieser Erfindung entweder gar nicht oder nur in sehr geringen Mengen eingesetzt. Darunter sind Mengen von bis zu 1 %, bezogen auf den Gehalt an Polymerisat, zu verstehen.

Als ionogene Emulgatoren kommen in erster Linie anionische Emulgatoren in Frage.

Es kann sich dabei um die Alkali- oder Ammoniumsalze von Alkyl-, Aryl- oder Alkylaryl- sulfonaten, -sulfaten,- phospaten, -phosphonaten oder Verbindungen mit anderen anionischen Endgruppen handeln, wobei sich auch Oligo- oder Polyethylenoxid- Einheiten zwischen dem Kohlenwasserstoffrest und der anionischen Gruppe befinden können. Typische Beispiele sind Natriumlaurylsulfat, Natriumundecylglykolethersulfat, Natriumoctylphenolglykolethersulfat, Natriumdodecylbenzolsulfonat, Natriumlauryldiglykolsulfat, Ammonium-tri-tert.-butylphenolpenta- oder -octaglykolsulfat.

Als Schutzkolloide verwendet man gegebenenfalls Naturstoffe wie Gummiarabicum, Stärke, Alginate oder modifizierte Naturstoffe wie Mehyl-, Ethyl-, Hydroxyalkyl- oder Carboxymethylcellulose oder synthetische Substanzen, wie Polyvinylalkohol, Polyvinylpyrrolidon oder Gemische aus derartigen Stoffen. Bevorzugt können modifizierte Cellulose-Derivate und synthetische Schutzkolloide verwendet werden.

Der Einsatz dieser Schutzkolloide ist jedoch bei Verwendung der beschriebenen Monomersysteme, wie dem Fachmann bekannt ist, nur beschränkt möglich. Die verwendeten Mengen sind häufig gering, beispielsweise bis zu 1 Gew.-% und die Verträglichkeit sowie die Art der Zugabe muß von Fall zu Fall geprüft werden. Vorzugsweise wird überhaupt kein Schutzkolloid während der Copolymerisation eingesetzt.

Zum Starten und Weiterführen der Polymerisation bedient man sich öl- und/oder vorzugsweise wasserlöslicher Radikalbildner oder Redoxsysteme. Es eignen sich z. B.

Wasserstoffperoxid, Kalium- oder Ammoniumperoxidisulfat, Dibenzoylperoxid, Laurylperoxid, Tri-tert.- butylperoxid, Bisazodüsobutyronitril, allein oder zusammen mit reduzierenden Komponenten, z. B. Natriumbisulfit, Sulfinsäurederivaten (Rongalit), Glucose, Ascorbinsäure und anderen reduzierend wirkenden Verbindungen.

Des Weiteren können Regler, wie Mercaptane und andere übliche, dem Fachmann für die Emulsionspolymerisation bekannte Hilfsstoffe, verwendet werden, so daß sich weitere Ausführungen erübrigen.

Die Polymerisationstemperatur bewegt sich typischerweise im Bereich von 60 bis 95°C.

Nach Abschluss der Polymerisation kann zur Entmonomerisierung eine weitere, vorzugsweise chemische Nachbehandlung, insbesondere mit Redoxkatalysatoren, wie zum Beispiel Kombinationen aus den obengenannten Oxidationsmitteln und Reduktionsmitteln angeschlossen werden. Weiterhin kann in bekannter Weise beispielsweise durch physikalische Entmonomerisierung, d. h. destillative Entfernung (insbesondere über Wasserdampfdestillation) oder durch Strippen mit einem Inertgas, vorhandenes Restmonomer entfernt werden. Besonders effizient ist eine Kombination aus physikalischen und chemischen Methoden, die eine Absenkung der Restmonomere auf sehr niedrige Gehalte (< 1000 ppm, vorzugsweise < 100 ppm) gestattet.

Die erfindungsgemäßen Polymerdispersionen besitzen typischerweise Feststoffgehalte von 20 bis 70 Gew.-%, vorzugsweise 30 bis 65 Gew.-%, und besonders bevorzugt 40 bis 60 Gew.-%.

Die erfindungsgemäßen Polymerdispersionen werden üblicherweise mit wäßrigen Ammoniak-, Alkali- und Erdalkalihydroxydlösungen neutralisiert und auf einen pH-Wert von 6,5 bis 10, vorzugsweise von 7,0 bis 9,0 eingestellt.

Auf Basis der erfindungsgemäßen Polymerdispersionen lassen sich pigmentierte und unpigmentierte Lacke, Lasuren und Farben zur Beschichtung von Holz und anderen Untergründen herstellen. Diese können unter Verwendung der üblichen Zusatzstoffe, wie Netzmitteln, beispielsweise Aminomethylpropanol; Entschäumern, beispielsweise Silikonen und Mineralölen, Verdickern, wie Polyacrylaten oder Polyurethanen; Wachsen, wie Paraffinen oder Polyethylen; Filmbildehilfsmitteln, beispielsweise Texanol oder Butyldiglykol; Pigmenten, beispielsweise Titandioxid; Füllstoffen, Dispergiermitteln, Konservierungsmitteln, Mattierungsmitteln und anderer dem Fachmann bekannter Additive, hergestellt werden.

Die erfindungsgemäßen Polymerdispersionen eignen sich zur Formulierung von pigmentierten und unpigmentierten Lacken, Lasuren, und Farben, insbesondere Glanzfarben zur Beschichtung von Substraten aller Art, insbesondere von Holz, beispielsweise von Fensterrahmen.

Diese Verwendungen sind ebenfalls Gegenstand der vorliegenden Erfindung.

Die nachfolgenden Beispiele erläutern die Erfindung ohne diese zu begrenzen. GT bedeutet dabei Gewichtsteile.

### Beispiel 1:

In einem 2l Reaktor wurden

| | | |
|---|---|---|
| 656,00 | GT | Wasser |
| 24,00 | GT | GT C₁₁-Alkylethersulfat Na-Salz mit ca. 7 Ethylenoxideinheiten 28 Gew.-%ig |
| 48,00 | GT | Monomeremulsion I |

auf 80°C erhitzt und mit 0,60 GT Ammoniumperoxidisulfat in 16 GT Wasser versetzt. Anschließend wurden innerhalb von 3,5 Stunden die verbleibende Monomeremulsion I und anschließend die Monomeremulsion II zusammen mit 1,8 GT Ammoniumperoxidisulfat, gelöst in 40 GT Wasser, zudosiert. Es wurde noch 60 min weiter geheizt und dann abgekühlt. Der pH-Wert wurde mit einer 25%-igen Ammoniaklösung auf pH=9,0 gestellt. Anschließend wurden zu der Dispersion 54 GT einer 25 %-igen wässerigen Lösung von 2,4,6-Tris-(1-phenylethyl)-phenol-ethoxylat mit einem Ethoxylierungsgrad von 20 und danach 120 GT einer 10 %-igen Adipinsäuredihydrazidlösung unter Rühren zugegeben. Der Feststoffgehalt der Dispersion betrug ca. 47%.

Zur Herstellung der Monomeremulsion I wurden,

| | | |
|---|---|---|
| 332,00 | GT | Wasser |
| 25,50 | GT | C₁₁- Alkylethersulfat Na-Salz mit ca. 7 Ethylenoxideinheiten,28 Gew.-%ig |
| 135,60 | GT | Methylmethacrylat |
| 578,34 | GT | Butylacrylat |
| 14,20 | GT | Methacrylsäure |
| 7,00 | GT | Acrylsäure |
| 21,42 | GT | Diacetonacrylamid |

mit einem Schnellrührer so lange gerührt, bis eine stabile Emulsion entstand.

Zur Herstellung der Monomeremulsion II wurden,

| | | |
|---|---|---|
| 226,50 | GT | Wasser |
| 17,40 | GT | C₁₁- Alkylethersulfat Na-Salz mit ca. 7 Ethylenoxideinheiten, 28 Gew.-%ig |
| 24,70 | GT | Styrol |
| 461,70 | GT | Methylmethacrylat |
| 3,30 | GT | Methacrylsäure |
| 1,50 | GT | Acrylsäure |
| 4,90 | GT | Diacetonacrylamid |

mit einem Schnellrührer so lange gerührt, bis eine stabile Emulsion entstand.

### Vergleichsbeispiel 1

Gleiche Herstellung wie in Beispiel 1 mit dem Unterschied, dass der Zusatz von 54 GT einer 25 %-igen wässerigen Lösung von 2,4,6-Tris-(1-phenylethyl)-phenol-ethoxylat mit einem Ethoxylierungsgrad von 20 entfiel.

### Beispiel 2

In einem 21 Reaktor wurden

| | | |
|---|---|---|
| 620,00 | GT | Wasser |
| 22,50 | GT | C₁₁- Alkylethersulfat Na-Salz mit ca 7 Ethylenoxideinheiten, 34 Gew.-%ig |
| 45,00 | GT | Monomeremulsion I |

auf 80°C erhitzt und mit 12 GT einer 5 %-igen wässerigen Ammoniumperoxidisulfatlösung versetzt. Anschließend wurden innerhalb von 3,5 Stunden die verbleibende Monomeremulsion I und anschließend die Monomeremulsion II zusammen mit 62 GT einer 5 %-igen wässerigen Ammoniumperoxidisulfatlösung zudosiert. Es wurde noch 60 min weiter geheizt und dann abgekühlt. Der pH-Wert wurde mit einer 25 %-igen Ammoniaklösung auf pH=9,0 eingestellt. Anschließend wurde die Dispersion mit 46 GT einer 25 %-igen wässerigen Lösung von 2,4,6-Tris-(1-phenylethyl)-phenol-ethoxylat mit einem Ethoxylierugnsrad von 20 und danach mit 78 GT einer 14 %-igen Adipinsäuredihydrazidlösung unter Rühren versetzt. Der Feststoffgehalt der Dispersion betrug ca. 47%.

Zur Herstellung der Monomeremulsion I wurden,

| | | |
|---|---|---|
| 115,00 | GT | Wasser |
| 15,25 | GT | C₁₁- Alkylethersulfat Na-Salz mit ca. 7 Ethylenoxideinheiten, 28 Gew.-%ig |
| 101,00 | GT | Styrol |
| 50,75 | GT | Butylacrylat |
| 335,00 | GT | Methylmethacrylat |
| 5,00 | GT | Methacrylsäure |
| 2,00 | GT | Acrylsäure |
| 5,00 | GT | Diacetonacrylamid |

mit einem Schnellrührer so lange gerührt, bis eine stabile Emulsion entstand.

Zur Herstellung der Monomeremulsion II wurden,

| | | |
|---|---|---|
| 118,00 | GT | Wasser |
| 18,50 | GT | C₁₁- Alkylethersulfat Na-Salz mit ca. 7 Ethylenoxideinheiten, 28 Gew.-%ig |
| 433,25 | GT | Butylacrylat |
| 185,00 | GT | Methylmethacrylat |
| 18,50 | GT | Methacrylsäure |
| 9,00 | GT | Acrylsäure |
| 18,50 | GT | Diacetonacrylamid |

mit einem Schnellrührer so lange gerührt, bis eine stabile Emulsion entstand.

### Vergleichsbeispiel 2

Gleiche Herstellung wie in Beispiel 2 mit dem Unterschied, dass der Zusatz von 46 GT einer 25 %-igen wässerigen Lösung von 2,4,6-Tris-(1-phenylethyl)-phenol-ethoxylat mit einem Ethoxylierungsgrad von 20 entfiel.

### Beispiel 3: Überprüfung der Scherstabilität

Die Dispersion wurde mit einer Airless Spritzanlage der Firma Wagner, Typ 28-40, unter Verwendung einer Spritzpistole der Fa. Wagner, Typ AG 09S, bestückt mit einer Düse mit 0,28 mm Durchmesser und einem Vorfilter mit 0,084 mm Maschenweite versprüht. Hierbei wurde ein Eingangsdruck von 4,5 bar und ein Arbeitsdruck von 90-100 bar verwendet.

Um die Scherstabilität der Dispersion zu prüfen, wurde die Dauer bestimmt, wie lange sich die Dispersion versprühen ließ, bevor sich der Vorfilter zusetzte.

Es wurden folgende Sprühzeiten ermittelt:

| | |
|---|---|
| Dispersion von Beispiel 1: | >8 Stunden |
| Dispersion von Vergleichsbeispiel 1: | 2 Stunden |
| Dispersion von Beispiel 2: | >8 Stunden |
| Dispersion von Vergleichsbeispiel 2: | 2 Stunden |

## Patentansprüche

1. Polymerdispersion enthaltend mindestens zwei Copolymerisate A und B in einem Gewichtsverhältnis von 5 : 95 bis 95 : 5, wobei sich die Glastemperaturen T_{g} der Copolymerisate A und B um mindestens 10 °C unterscheiden, sowie mindestens einen nichtionischen Emulgator aus der Gruppe der arylsubstituierten Phenolalkylenoxyether.

2. Polymerdispersion nach Anspruch 1, **dadurch gekennzeichnet, dass** die Copolymerisate A und B in einem Gewichtsverhältnis von 30 : 70 bis 70 : 30, besonders bevorzugt 40 : 60 bis 60 : 40, vorliegen und dass sich deren Glastemperaturen T_{g} um mindestens 20 °C, besonders bevorzugt um mindestens 30 °C, unterscheiden.

3. Polymerdispersion nach Anspruch 1 oder 2, **dadurch gekennzeichnet, dass** die Copolymerisate A und B als Mehrstufenpolymerisate vorliegen.

4. Polymerdispersion nach einem der Ansprüche 1 bis 3, **dadurch gekennzeichnet, dass** Copolymerisat A eine Glasübergangstemperatur von -60 bis 30 °C aufweist und dass Copolymerisat B eine Glasübergangstemperatur von 30 bis 120 °C aufweist.

5. Polymerdispersion nach Anspruch 4, **dadurch gekennzeichnet, dass** Copolymerisat A eine Glasübergangstemperatur von -40 bis 20 °C aufweist und dass Copolymerisat B eine Glasübergangstemperatur von 45 bis 115 °C aufweist.

6. Polymerdispersion nach einem der Ansprüche 1 bis 5, **dadurch gekennzeichnet, dass** Copolymerisate A und B sich von Acrylaten und/oder Methacrylaten und/oder Vinylaromaten als Hauptmonomeren ableiten, die in Mengen von 70 bis 99,9 Gew. %, bezogen auf die Gesamtmenge der in der Copolymerisation des jeweiligen Copolymerisats eingesetzten Monomeren, vorliegen.

7. Polymerdispersion nach Anspruch 6, **dadurch gekennzeichnet, dass** Copolymerisate A und B sich ableiten von:
a) 85 bis 99,8 Gew. % Acrylsäureestern mit C₁ bis C₂₀ Alkanolen, Methacrylsäureestern mit C₁ bis C₂₀ Alkanolen und/oder vinylaromatischen Monomeren,
b) 0,2 bis 5 Gew. % copolymerisierbaren Carbonsäuren, copolymerisierbaren Carbonsäureamiden, copolymerisierbaren Phosphaten und/oder copolymerisierbaren Phosphonaten, copolymerisierbaren Sulfaten und/oder copolymerisierbaren Sulfonsäuren und/oder deren Salzen,
c) 0 bis 10 Gew. % Monomeren mit Ketogruppen, und
d) 0 bis 10 Gew. % sonstigen Monomeren.

8. Polymerdispersion nach Anspruch 7, **dadurch gekennzeichnet, dass** die Copolymerisate A und/oder B Struktureinheiten enthalten, die sich ableiten von Monomeren a), die ausgewählt werden aus der Gruppe der Acryl- und/oder Methacrylsäureester von C₁ bis C₂₀ Monoalkoholen, insbesondere von Ethylacrylat, Butylacrylat, n-Octylacrylat, 2-Ethylhexylacrylat, Methylmethacrylat, Butylmethacrylat, Cyclohexylmethacrylat, Isobornylmethacrylat, und/oder der vinylaromatischen Monomeren, insbesondere von Styrol oder Vinyltoluol.

9. Polymerdispersion nach Anspruch 7, **dadurch gekennzeichnet, dass** die Copolymerisate A und/oder B Struktureinheiten enthalten, die sich ableiten von Monomeren b), die ausgewählt werden aus der Gruppe der Acrylsäure, Methacrylsäure, Itaconsäure, des Acrylamids und/oder Methacrylamids und / oder des Natriumethensulfonats, dem Salz des Sulfopropylmethacrylats und/oder dem Salz der Acrylamido-2-methyl-propansulfonsäure und/oder des Vinylphosphonats.

10. Polymerdispersion nach Anspruch 7, **dadurch gekennzeichnet, dass** die Copolymerisate A und/oder B Struktureinheiten enthalten, die sich ableiten von Monomeren c), die ausgewählt werden aus der Gruppe der Acetoacetoxygruppen haltigen Monomere, insbesondere des Acetoacetoxyethylmethacrylats, Acetoacetoxybutylmethacrylats, Acrylamidomethylacetylacetons und/oder Acetessigsäurevinylesters, der polymerisierbaren Derivate des Diacetons, insbesondere des Diacetonacrylamids und/oder des Diacetonmethacrylamids, sowie des Butanonmethacrylsäuresters.

11. Polymerdispersion nach Anspruch 7, **dadurch gekennzeichnet, dass** die Copolymerisate A und/oder B Struktureinheiten enthalten, die sich ableiten von Monomeren d), die ausgewählt werden aus der Gruppe der Acrylate oder der Methacrylate abgeleitet von Alkoholen oder Phenolen mit polaren oder reaktive Substituenten, insbesondere der Hydroxyalkyl(meth)acrylate, der Glycidyl-(meth)acrylate, sowie der Acryloyloxyalkylsilane, der Methacryloyloxyalkylsilane, der Acryloyloxyalkylphospate; sowie der ethylenisch ungesättigen Silane, insbesondere der Alkoxyvinylsilane, oder der polymerisierbaren Ethylenharnstoffderivate, insbesondere des N-(β-(Meth)acryloxyethyl)-N,N'-ethylenharnstoffs und des N-(β-Acrylamidoethyl)-N,N'-ethylenharnstoffs.

12. Polymerdispersion nach Anspruch 7, **dadurch gekennzeichnet, dass** die Copolymerisate A und/oder B Struktureinheiten enthalten, die sich ableiten von Monomeren c), wobei die Polymerdispersion mit polyfunktionellen Carbonsäurehydraziden versetzt worden ist, die mindestens zwei Hydrazidgruppen, insbesondere Adipinsäuredihydrazid, Oxalsäuredihydrazid, Isophthalsäure-dihydrazid und Polyacrylsäurepolyhydrazid, enthalten.

13. Polymerdispersion nach Anspruch 1, **dadurch gekennzeichnet, dass** der nichtionischen Emulgator aus der Gruppe der arylsubstituierten Phenolalkylenoxyether eine Verbindung der Formel I und/oder II bedeutet 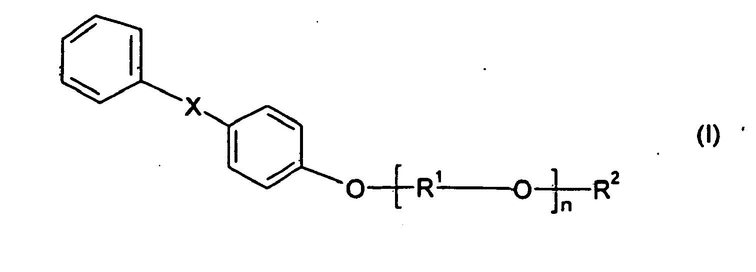 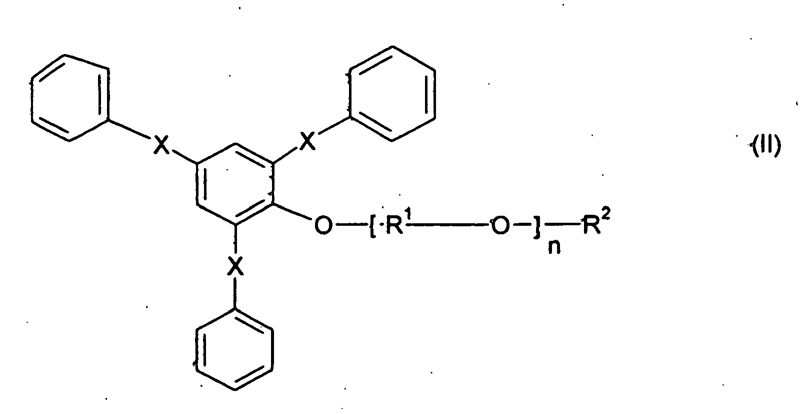 worin X eine kovalente Bindung, Sauerstoff oder ein Alkylenrest, n eine ganze Zahl zwischen 1 und 40 bedeutet, R¹ ein Alkylen- oder Cycloalkylenrest ist, und R² Wasserstoff oder ein Alkyl- oder Cycloalkylrest.

14. Polymerdispersion nach Anspruch 13, **dadurch gekennzeichnet, dass** X eine kovalente Bindung oder ein Rest -CₒH₂ₒ- mit o = 1 bis 6 ist, R¹ ein Rest -CₚH₂ₚ- mit p = 2 bis 4 ist, und R² Methyl oder Ethyl bedeutet.

15. Polymerdispersion nach Anspruch 13, **dadurch gekennzeichnet, dass** der nichtionischen Emulgator aus der Gruppe der arylsubstituierten Phenolalkylenoxyether ein ethoxyliertes 2,4,6-Tris-(1-phenylethyl)-phenol ist.

16. Verfahren zur Herstellung der Polymerdispersion nach Anspruch 1 durch stufenweise Emulsionspolymerisation umfassend die Maßnahmen:
i) Emulgieren von Monomeren einer Monomermischung I in wässriger Phase in Gegenwart von Emulgatoren, Initiatoren und gegebenenfalls Schutzkolloiden und Polymerisieren dieser Monomermischung I bei Temperaturen von 60 bis 95°C
ii) Emulgieren von Monomeren einer Monomermischung II in wässriger Phase in Gegenwart von Emulgatoren, Initiatoren und gegebenenfalls Schutzkolloiden und Polymerisieren dieser Monomermischung II in Gegenwart der in Stufe i) erhaltenen Dispersion bei Temperaturen von 60 bis 95°C, wobei
iii) Art und Menge der Monomermischungen I und II so ausgewählt werden, dass diese die Copolymerisate A und B nach Anspruch 1 ergeben.

17. Verfahren nach Anspruch 16, **dadurch gekennzeichnet, dass** eine kleine Menge der Monomermischung I vorpolymerisiert wird und anschließend nacheinander die verbliebene Menge an Monomermischung I und die Monomermischung II in Form einer wässrigen Emulsion zudosiert werden.

18. Verfahren zur Herstellung der Polymerdispersion nach Anspruch 1 durch getrennte Emulsionspolymerisation umfassend die Maßnahmen:
i) Emulgieren von Monomeren einer Monomermischung I in wässriger Phase in Gegenwart von Emulgatoren, Initiatoren und gegebenenfalls Schutzkolloiden und Polymerisieren dieser Monomermischung I in einem ersten Reaktor bei Temperaturen von 60 bis 95°C zur Herstellung eines Copolymerisats A,
ii) Emulgieren von Monomeren einer Monomermischung II in wässriger Phase in Gegenwart von Emulgatoren, Initiatoren und gegebenenfalls Schutzkolloiden und Polymerisieren dieser Monomermischung II in einem zweiten Reaktor bei Temperaturen von 60 bis 95°C zur Herstellung eines Copolymerisats B, wobei
iii) Art und Menge der Monomermischungen I und II so ausgewählt werden, dass diese die Copolymerisate A und B nach Anspruch 1 ergeben, und
iv) Vermischen der Copolymerisate A und B zur Herstellung der Polymerdispersion.

19. Verwendung von Polymerdispersion nach Anspruch 1 zum Beschichten von Substraten aller Art.

20. Verwendung von Polymerdispersionen nach Anspruch 1 zur Formulierung von pigmentierten und unpigmentierten Lacken, Lasuren, und Farben.

## Claims

1. A polymer dispersion containing at least two copolymers A and B in a weight ratio of from 5:95 to 95:5, the glass transition temperature T_{g} of the copolymers A and B differing by at least 10°C, and at least one nonionic emulsifier from the group consisting of the aryl-substituted phenolalkyleneoxy ethers.

2. The polymer dispersion as claimed in claim 1, wherein the copolymers A and B are present in a weight ratio of from 30:70 to 70:30, particularly preferably from 40:60 to 60:40, and wherein the glass transition temperatures T_{g} thereof differ by at least 20°C, particularly preferably by at least 30°C.

3. The polymer dispersion as claimed in claim 1 or 2, wherein the copolymers A and B are present as multistage polymers.

4. The polymer dispersion as claimed in any of claims 1 to 3, wherein copolymer A has a glass transition temperature of from -60 to 30°C and wherein copolymer B has a glass transition temperature of from 30 to 120°C.

5. The polymer dispersion as claimed in claim 4, wherein copolymer A has a glass transition temperature of from -40 to 20°C and wherein the copolymer B has a glass transition temperature of from 45 to 115°C.

6. The polymer dispersion as claimed in any of claims 1 to 5, wherein copolymers A and B are derived from acrylates and/or methacrylates and/or vinylaromatics as main monomers, which are present in amounts of from 70 to 99.9% by weight, based on the total amount of the monomers used in the copolymerization of the respective copolymer.

7. The polymer dispersion as claimed in claim 6, wherein copolymers A and B are derived from:
a) from 85 to 99.8% by weight of acrylates of C₁ to C₂₀ alkanols, methacrylates of C₁ to C₂₀ alkanols and/or vinylaromatic monomers,
b) from 0.2 to 5% by weight of copolymerizable carboxylic acids, copolymerizable carboxamides, copolymerizable phosphates and/or copolymerizable phosphonates, copolymerizable sulfates and/or copolymerizable sulfonic acids and/or salts thereof,
c) from 0 to 10% by weight of monomers having keto groups and
d) from 0 to 10% by weight of other monomers.

8. The polymer dispersion as claimed in claim 7, wherein the copolymers A and/or B contain structural units which are derived from monomers a) which are selected from the group consisting of the acrylates and/or methacrylates of C₁ to C₂₀ monoalcohols, in particular from ethyl acrylate, butyl acrylate, n-octyl acrylate, 2-ethylhexyl acrylate, methyl methacrylate, butyl methacrylate, cyclohexyl methacrylate, isobornyl methacrylate, and/or the vinylaromatic monomers, in particular styrene or vinyltoluene.

9. The polymer dispersion as claimed in claim 7, wherein the copolymers A and/or B contain structural units which are derived from monomers b) which are selected from the group consisting of acrylic acid, methacrylic acid, itaconic acid, of acrylamide and/or of methacrylamide and/or of sodium ethenesulfonate, the salt of sulfopropyl methacrylate and/or the salt of acrylamido-2-methylpropanesulfonic acid and/or vinylphosphonate.

10. The polymer dispersion as claimed in claim 7, wherein the copolymers A and/or B contain structural units which are derived from monomers c) which are selected from the group consisting of the monomers containing acetoacetoxy groups, in particular of acetoacetoxyethyl methacrylate, acetoacetoxybutyl methacrylate, acrylamidomethylacetylacetone and/or vinyl acetoacetate, of the polymerizable derivatives of diacetone, in particular of diacetone acrylamide and/or of diacetone methacrylamide and of butanone methacrylate.

11. The polymer dispersion as claimed in claim 7, wherein the copolymers A and/or B contain structural units which are derived from monomers d) which are selected from the group consisting of the acrylates or of the methacrylates, derived from alcohols or phenols having polar or reactive substituents, in particular hydroxyalkyl (meth)acrylates, glycidyl (meth)acrylates and acryloyloxyalkylsilanes, methacryloyloxyalkylsilanes, acryloyloxyalkyl phosphates; and the ethylenically unsaturated silanes, in particular alkoxyvinylsilanes, or the polymerizable ethyleneurea derivatives, in particular N-(β-(meth)acryloyloxyethyl)-N,N'-ethyleneurea and N-(β-acrylamidoethyl)-N,N'-ethyleneurea.

12. The polymer dispersion as claimed in claim 7, wherein the copolymers A and/or B contain structural units which are derived from monomers c), polyfunctional carboxylic acid hydrazides which contain at least two hydrazide groups, in particular adipic acid dihydrazide, oxalic acid dihydrazide, isophthalic acid dihydrazide and polyacrylic acid polyhydrazide, having been added to the polymer dispersion.

13. The polymer dispersion as claimed in claim 1, wherein the nonionic emulsifier from the group consisting of the aryl-substituted phenolalkyleneoxy ethers is a compound of the formula I and/or II 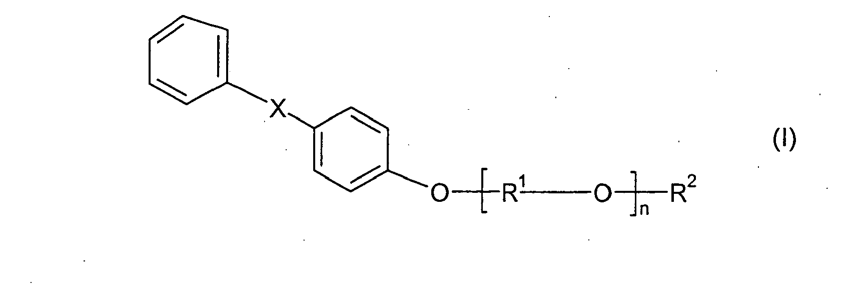 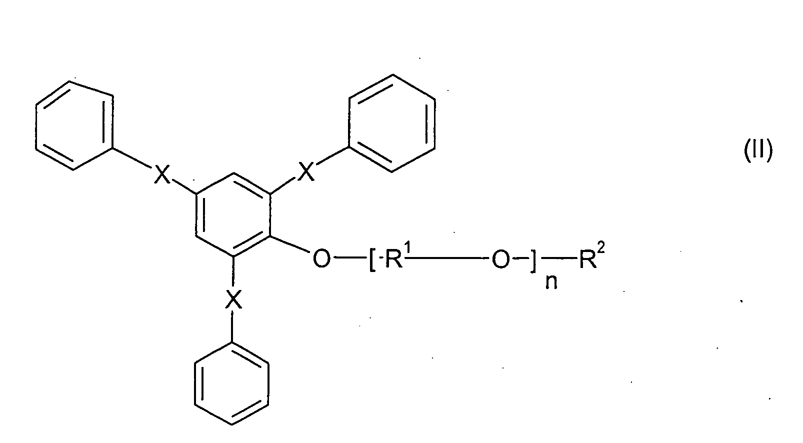 in which X is a covalent bond, oxygen or an alkylene radical, n is an integer from 1 to 40, R¹ is an alkylene or cycloalkylene radical and R² is hydrogen or an alkyl or cycloalkyl radical.

14. The polymer dispersion as claimed in claim 13, wherein X is a covalent bond or -CₒH₂ₒ- radical where o is from 1 to 6, R¹ is a -CₚH₂ₚ- radical where p is from 2 to 4, and R² is methyl or ethyl.

15. The polymer dispersion as claimed in claim 13, wherein the nonionic emulsifier from the group consisting of the aryl-substituted phenolalkyleneoxy ethers is an ethoxylated 2,4,6-tris(1-phenylethyl)phenol.

16. A process for the preparation of the polymer dispersion as claimed in claim 1 by stepwise emulsion polymerization, comprising the measures:
i) emulsification of monomers of a monomer mixture I in an aqueous phase in the presence of emulsifiers, initiators and optionally protective colloids and polymerization of this monomer mixture I at temperatures of from 60 to 95°C.
ii) emulsification of monomers of a monomer mixture II in an aqueous phase in the presence of emulsifiers, initiators and optionally protective colloids and polymerization of this monomer mixture II in the presence of the dispersion obtained in stage i), at temperatures of from 60 to 95°C,
iii) the type and amount of the monomer mixtures I and II being chosen so that they give the copolymers A and B as claimed in claim 1.

17. The process as claimed in claim 16, wherein a small amount of the monomer mixture I is prepolymerized and then the remaining amount of monomer mixture I and the monomer mixture II are metered in in succession in the form of an aqueous emulsion.

18. A process for the preparation of the polymer dispersion as claimed in claim 1 by separate emulsion polymerization comprising the measures:
i) emulsification of monomers of a monomer mixture I in an aqueous phase in the presence of emulsifiers, initiators and optionally protective colloids and polymerization of this monomer mixture I in a first reactor at temperatures of from 60 to 95°C for the preparation of a copolymer A,
ii) emulsification of monomers of a monomer mixture II in an aqueous phase in the presence of emulsifiers, initiators and optionally protective colloids and polymerization of this monomer mixture II in a second reactor at temperatures of from 60 to 95°C for the preparation of a copolymer B,
iii) the type and amount of monomer mixtures I and II being chosen so that they give the copolymers A and B as claimed in claim 1, and
iv) mixing of the copolymers A and B for the preparation of the polymer dispersion.

19. Use of a polymer dispersion as claimed in claim 1 for coating substrates of all types.

20. The use of polymer dispersions as claimed in claim 1 for formulating pigmented and unpigmented varnishes, glazes and paints.

## Revendications

1. Dispersion de polymères comprenant au moins deux copolymères A et B dans un rapport pondéral de 5:95 à 95:5, les températures de transition vitreuse T_{g} des copolymères A et B présentant une différence d'au moins 10°C, ainsi qu'au moins un émulsifiant non ionique du groupe des éthers phénolsalkylènoxy substitués par un groupement aryle.

2. Dispersion de polymères selon la revendication 1, **caractérisée en ce que** les copolymères A et B sont présents dans un rapport pondéral de 30:70 à 70:30, d'une manière particulièrement préférée de 40:60 à 60:40, et que leurs températures de transition vitreuse T_{g} présente une différence d'au moins 20°C, d'une manière particulièrement préférée d'au moins 30°C.

3. Dispersion de polymères selon la revendication 1 ou 2, **caractérisée en ce que** les copolymères A et B se présentent sous forme de polymères à plusieurs étages.

4. Dispersion de polymères selon l'une des revendications 1 à 3, **caractérisée en ce que** le copolymère A présente une température de transition vitreuse de -60 à 30°C, et que le copolymère B présente une température de transition vitreuse de 30 à 120°C.

5. Dispersion de polymères selon la revendication 4, **caractérisée en ce que** le copolymère A présente une température de transition vitreuse de -40 à 20°C, et que le copolymère B présente une température de transition vitreuse de 45 à 115°C.

6. Dispersion de polymères selon l'une des revendications 1 à 5, **caractérisée en ce que** les copolymères A et B dérivent d'acrylates et/ou de méthacrylates et/ou de composés vinylaromatiques en tant que monomères principaux, qui sont présents en des quantités de 70 à 99,9 % en poids par rapport à la quantité totale des monomères utilisés pour la copolymérisation du copolymère considéré.

7. Dispersion de polymères selon la revendication 6, **caractérisée en ce que** les copolymères A et B dérivent
a) de 85 à 99,8 % en poids d'esters de l'acide acrylique d'alcanols en C₁ à C₂₀, d'esters de l'acide méthacrylique d'alcanols en C₁ à C₂₀, et/ou de monomères vinylaromatiques,
b) de 0,2 à 5 % en poids d'acides carboxyliques copolymérisables, de carboxamides copolymérisables, de phosphates copolymérisables et/ou de phosphonates copolymérisables, de sulfates copolymérisables et/ou d'acides sulfoniques et/ou de leurs sels copolymérisables,
c) de 0 à 10 % en poids de monomères comportant des groupes cétones,
et
d) de 0 à 10 % en poids d'autres monomères.

8. Dispersion de polymères selon la revendication 7, **caractérisée en ce que** les copolymères A et/ou B contiennent des motifs structuraux qui dérivent de monomères a), qui sont choisis dans le groupe des esters de l'acide acrylique et/ou de l'acide méthacrylique de monoalcools en C₁ à C₂₀, en particulier l'acrylate d'éthyle, l'acrylate de butyle, l'acrylate de n-octyle, l'acrylate de 2-éthylhexyle, le méthacrylate de méthyle, le méthacrylate de butyle, le méthacrylate de cyclohexyle, le méthacrylate d'isobomyle et/ou les monomères vinyl-aromatiques, notamment le styrène ou le vinyltoluène.

9. Dispersion de polymères selon la revendication 7, **caractérisée en ce que** les copolymères A et/ou B contiennent des motifs structuraux qui dérivent de monomères b) qui sont choisis dans le groupe consistant en l'acide acrylique, l'acide méthacrylique, l'acide itaconique, acrylamide et/ou le méthacrylamide et/ou le méthènesulfonate de sodium, le sel du méthacrylate de sulfopropyle et/ou le sel de l'acide acrylamido-2-méthyl-propanesulfonate, et/ou du vinylphosphonate.

10. Dispersion de polymères selon la revendication 7, **caractérisée en ce que** les copolymères A et/ou B contiennent des motifs structuraux qui dérivent de monomères c) qui sont choisis dans le groupe consistant en les monomères contenant des groupes acétoacétoxy, en particulier le méthacrylate d'acétoacétoxyéthyle, le méthacrylate d'acétoacétoxybutyle, l'acrylamidométhyl-acétone et/ou l'acétoacétate de vinyle, les dérivés polymérisables de la diacétone, notamment le diacétoneacrylamide et/ou le diacétoneméthacrylamide, ainsi que les esters de l'acide butanoneméthacrylique.

11. Dispersion de polymères selon la revendication 7, **caractérisée en ce que** les copolymères A et/ou B contiennent des motifs structuraux qui dérivent de monomères d) qui sont choisis dans le groupe consistant en les acrylates ou les méthacrylates dérivés d'alcools ou de phénols ayant des substituants polaires ou réactifs, en particulier les (méth)acrylates d'hydroxyalkyle, les (méth)acrylates de glycidyle, ainsi que les acryloyloxy-alkylsilanes, les méthacryloyloxyalkylsilanes, les phosphates d'acryloyloxyalkyle ; ainsi que les silanes à insaturation éthylénique, en particulier les alcoxyvinyl-silanes, ou les dérivés polymérisables de l'éthylène-urée, notamment la N-(β-(méth)acryloxyéthyl)-N,N'-éthylène-urée et la N-(β-acrylamidoéthyl)-N,N'-éthylène-urée.

12. Dispersion de polymères selon la revendication 7, **caractérisée en ce que** les copolymères A et/ou B contiennent des motifs structuraux qui dérivent de monomères c), la dispersion de polymères ayant été additionnée d'hydrazides d'acides carboxyliques polyfonctionnels, qui contiennent au moins deux groupes hydrazido, en particulier le dihydrazide de l'acide adipique, le dihydrazide de l'acide oxalique, le dihydrazide de l'acide isophtalique et le polyhydrazide de poly(acide acrylique).

13. Dispersion de polymères selon la revendication 1, **caractérisée en ce que** l'émulsifiant non ionique du groupe des phénols alcoxylés à substitution aryle est un composé de formule 1 et/ou II 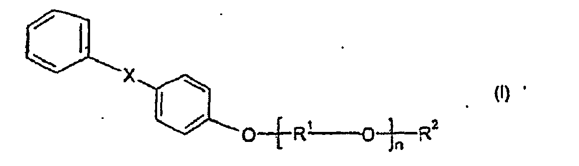 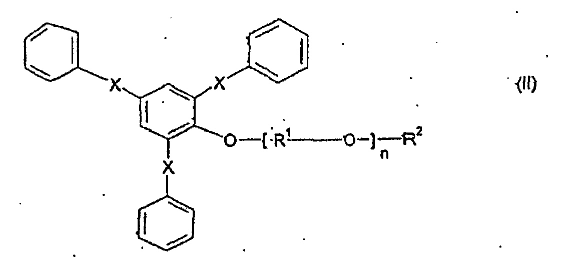 où X est une liaison covalente, un atome d'oxygène ou un radical alkylène, n est un nombre entier compris entre 1 et 40, R¹ est un radical alkylène ou cycloalkylène et R² est un atome d'hydrogène ou un radical alkyle ou cycloalkyle.

14. Dispersion de polymères selon la revendication 13, **caractérisée en ce que** X est une liaison covalente ou un radical -CₒH₂ₒ-, où o = 1 à 6, R¹ est un radical - CₚH₂ₚ- avec p = 2 à 4, et R² est le groupe méthyle ou éthyle.

15. Dispersion de polymères selon la revendication 13, **caractérisée en ce que** l'émulsifiant non ionique du groupe des phénols alcoxylés à substitution aryle est un 2,4,6-tris-(1-phényléthyl)-phénol éthoxylé.

16. Procédé de préparation de la dispersion de polymères selon la revendication 1 par polymérisation en émulsion séquencée comprenant les étapes suivantes :
i) émulsification de monomères d'un mélange de monomères I en phase aqueuse en présence d'émulsifiants, d'amorceurs et éventuellement de colloïdes protecteurs, et polymérisation de ce mélange de monomères I à des températures de 60 à 95°C,
ii) émulsification de monomères d'un mélange de monomères II en phase aqueuse en présence d'émulsifiants, d'amorceurs et éventuellement de colloïdes protecteurs et polymérisation de ce mélange de monomères II en présence de la dispersion obtenue dans l'étape i), à des températures de 60 à 95°C,
iii) la nature et la quantité des mélanges de monomères I et II) étant choisies de façon qu'ils donnent les copolymères A et B selon la revendication 1.

17. Procédé selon la revendication 16, **caractérisé en ce qu'**on prépolymérise une petite quantité du mélange de monomères I, puis on ajoute successivement la quantité restante du mélange de monomères I et le mélange de monomères II sous forme d'une émulsion aqueuse.

18. Procédé de préparation d'une dispersion de polymères selon la revendication 1 par polymérisation séparée en émulsion, comprenant les étapes suivantes :
i) émulsification de monomères d'un mélange de monomères I en phase aqueuse en présence d'émulsifiants, d'amorceurs et éventuellement de colloïdes protecteurs, et polymérisation de ce mélange de monomères I dans un premier réacteur à des températures de 60 à 95°C pour préparer un copolymère A,
ii) émulsification de monomères d'un mélange de monomères II en phase aqueuse en présence d'émulsifiants, d'amorceurs et éventuellement de colloïdes protecteurs, et polymérisation de ce mélange de monomères II dans un deuxième réacteur à des températures de 60 à 95°C pour préparer un copolymère B,
iii) la nature et la quantité des mélanges de monomères I et II étant choisies de façon qu'elles donnent les copolymères A et B selon la revendication 1, et
iv) mélange des copolymères A et B pour préparer la dispersion de polymères.

19. Utilisation de la dispersion de polymères selon la revendication 1 pour revêtir des substrats de tous types.

20. Utilisation de dispersions de polymères selon la revendication 1 pour formuler des vernis, des lasures et des peintures pigmentées et non pigmentées.
